# EUROPEAN PATENT SPECIFICATION

(11) **EP 2 075 494 B1**
(45) Date of publication and mention of the grant of the patent: **22.02.2012**
(21) Application number: 07124070.9
(22) Date of filing: 26.12.2007
(51) Int. Cl.: F16K 1/36, F16K 27/00, E03B 9/08, E03B 9/14

(54) **Valve and hydrant.**
Ventil und Hydrant
Soupape et bouche d'arrosage

(43) Date of publication of application: 01.07.2009
(73) Proprietor: Desbeck N.V., 1560 Hoeilaart (BE)
(72) Inventor: Flamant, Jean-Pol, 1450 Chastre (BE); De Rijcke, Ronald, 1473 Glabais (BE); Beeckman, Eric, 4102 Liege (BE); Emmerechts, Carl, 4102 Liege (BE); Bormans, François, 4102 Liege (BE)
(74) Representative: Quintelier, Claude

(56) References cited:
- DE-A1- 2 424 915
- DE-A1- 2 621 163

## Description

The present invention relates to a valve, in particular a water valve for a hydrant.

Such hydrants comprise a hollow body connected to a water supply through a spindle-operated valve below the hollow body. To prevent that, after the valve has been opened and closed again, water remains within the hollow body, the hydrant is normally provided with a drain hole for draining the remaining water from the hollow body. This is particularly necessary in cold climates in which freezing water could burst said hollow body and/or damage the valve.

However, when the valve is opened, it is normally necessary to seal the drain hole to prevent that at least part of the water arriving at high pressure from the water supply leaks through the drain hole. For this purpose, in a number of prior art hydrants, such as, for instance, that disclosed in the British patent GB 1 281 982, the top of the valve body is provided with an extension that will seal the drain hole when said valve body is displaced towards its open position.

Such a valve does however have several drawbacks. Its main drawback is that the drain hole will necessarily be placed at some height above the valve body. Therefore, the water within the hollow body will not be completely drained. Recent regulations, notably the European standards EN 14384, EN 14339:2005 and EN 1074-6 for above- and underground hydrants, have however restricted the amount of water that can remain within the hollow body to less than 100 ml.

To try to solve this problem, a hydrant was disclosed in the International Patent Applications WO 02/35019 and WO 02/075062 with two valves: a main valve with a cylindrical valve seat and a non-return valve below said main valve, with a spherical valve body. The higher complexity of such a hydrant is however a significant drawback, in terms of cost, reliability, and ease of maintenance.

An alternative hydrant valve was disclosed in US Patents US 5,368,064 and US 5,441,074, with a conical valve seat, and a valve body with a drainage canal for connecting the hollow body with the drain hole when the valve body is in the closed position and two extensions provided on top of the valve body for guiding the valve body and sealing the drain hole when the valve is open. However, in this prior art valve, the valve body is displaced downwardly to open the valve. As a result, it is not possible to replace the valve body through the hollow body of the hydrant, for instance for repairs or maintenance after the valve has been mounted underground. This hydrant is thus not in conformity with current European standards either.

Instead, for a more complete drainage of the water within the hollow body, another valve was disclosed in German patent application publication DE 26 21 163. This prior art valve comprises a valve seat and a valve body displaceable in an axis between a lower position in which said valve body fits against the valve seat, thus closing the valve, and a higher position in which the valve is open. The valve seat comprises an axial surface substantially parallel to said axis of displacement of the valve body, and a drain hole perforated in said first surface of the valve seat. The valve body comprises a top, a bottom, an axial surface between said top and bottom, with a substantially tight fit with said axial surface of the valve seat, a drainage canal between said top and said axial surface of the valve body for connecting said top with said drain hole when the valve body is in its lower position, and at least two extensions at the bottom for axially guiding said valve body and sealing said drain hole when the valve body is in said higher position.

However, having only an axial valve seat surface has significant drawbacks. In particular, debris such as shavings, pebbles, dust, etc., caught between the valve body and the valve seat may cause scratches in the valve body and/or the valve seat when the valve body moves axially between its closed and open positions. Such scratches can impair the leak-tightness of the valve significantly, defeating the whole purpose of the drain hole.

While it has been disclosed, in German patent application publication DE 24 24 915 A1, to provide a sealing body with a first axial surface and a second axial surface at an angle, in order to obtain an enhanced sealing effect, it was not possible to combine this teaching with the valve of DE 26 21 163 A1, since the collar providing the second axial surface in DE 24 24 915 A1 would collide with the drainage channel in the valve body in DE 26 21 163 A1.

The purpose of the present invention is thus that of ensuring an improved valve which allows a complete drainage of liquid above it, yet has better leak-tightness and easier maintenance than those of the prior art.

In order to achieve this, the seat of the valve of the invention further comprises an upper surface, above its axial surface and at a substantial angle with respect to said axis of displacement of said valve body, and said valve body also comprises another surface substantially fitting said upper surface of the valve seat. It becomes thus possible to exert an axial pressure between valve body and valve seat for a tighter fit of the valve to complement that between the axial surfaces of valve body and valve seat.

In a particular embodiment, said extensions at the bottom of the valve body may be substantially rigid. In this case, those extensions are preferably in a number of two, with a hard core, for instance metallic, and a soft coating, for instance elastomeric, from a natural elastomer, a synthetic elastomer, or a combination thereof. Together, the two extensions ensure the axial guidance of the valve body, whereas one of them covers the drain hole in the valve seat when the valve body is in the open position, thus sealing said drain hole, and preventing that a substantial part of the water going through the valve and the hydrant when the valve is open escapes through said drain hole.

In an alternative embodiment, said extensions at the bottom of the valve body may be at least three, preferably at least four, and one of them, sealing said drain hole when the valve body is in its higher position, may be substantially flexible, whereas the others may be substantially rigid. Said substantially flexible extension being pushed outwardly by the water pressure, it will ensure a superior seal compared with a rigid extension. At least two other, substantially rigid extensions are needed in order to ensure the proper axial guidance of the valve body. Preferably, the two substantially rigid extensions have a hard core, for instance metallic, and a soft coating, for instance elastomeric, from a natural elastomer, a synthetic elastomer, or a combination thereof; whereas the substantially flexible extension is substantially integrally made of said elastomeric material or combination of materials.

Preferably, to prevent debris from blocking the opening of the drainage canal to the top of said valve body, said opening may be formed in a small sunk area in said top of said valve body.

Advantageously, said valve body may comprise a hard core, for example metallic, and a soft coating, for example elastomeric, and preferably suitable for contact with drinking water. As above, said elastomeric coating may comprise a natural elastomer, a synthetic elastomer, or a combination thereof. However, if said coating is to be suitable for contact with drinking water, this choice may be restricted to certain synthetic elastomers. If said soft coating is suitable for contact with drinking water, the valve of the invention will be suitable for use in hydrants in certain regions where hydrants are connected to the drinking water supply. A soft coating of the valve body ensures a better fit with the valve seat, while the hard core prevents an excessive deformation of the valve body by the valve closing forces and/or the water pressure.

Advantageously, said axial surfaces may be substantially cylindrical and said additional surfaces may be substantially conical or spherical. Such shapes can be more easily manufactured, for instance with a lathe.

The present invention also relates to a hydrant comprising a hollow body on top of a valve according to the invention. With the valve of the invention, the hollow body will be completely drained after use of the hydrant ensuring its safety in cold climates.

Advantageously, said hydrant may comprise a rod, preferably connected to a spindle, within said hollow body to move said valve body within said higher and lower positions. This provides a practical command means for opening and closing the valve from above the hollow body, in particular in underground hydrants. With a spindle, it will be possible to actuate an axial movement of the rod to open and close the valve with a rotation of the spindle using a comparatively light torque.

In a particular embodiment, said valve seat may be integrally formed within said hollow body. This arrangement would benefit from low production costs.

In an alternative embodiment, said valve seat is formed in an inner sleeve press-fit within said hydrant. In particular if the hollow body is produced from cast iron, its corrosion resistance may be inadequate for a valve seat. For this reason it can be advantageous to press-fit a valve seat of a more corrosion-resistant material, such as for instance stainless steel or brass, in a bore in said hollow body or in a separate part of said hydrant. Moreover, forming the valve seat in such a sleeve smaller than the hollow body of the hydrant facilitates an improvement in the manufacturing tolerances of the valve seat.

In another alternative embodiment, said valve may be separate from, and releasably attached to, the hollow body. This can be advantageous for facilitating the maintenance and exchange of the valve in, for instance, a hydrant installed over the ground.

Several embodiments of the invention will be described in detail, but not restrictively, with reference to the accompanying figures, in which:
Fig. 1 shows an embodiment of a hydrant according to the invention;
Fig. 2a shows schematically an embodiment of a valve according to the invention in its closed position;
Fig. 2b shows schematically the same embodiment of a valve according to the invention between its closed and its open position;
Fig. 2c shows schematically the same embodiment of a valve according to the invention in its open position;
Fig. 3 shows the valve body of an alternative embodiment of the valve according to the invention;
Fig. 4 shows an alternative embodiment of a hydrant according to the invention; and
Fig. 5 shows another alternative embodiment of a hydrant according to the invention.

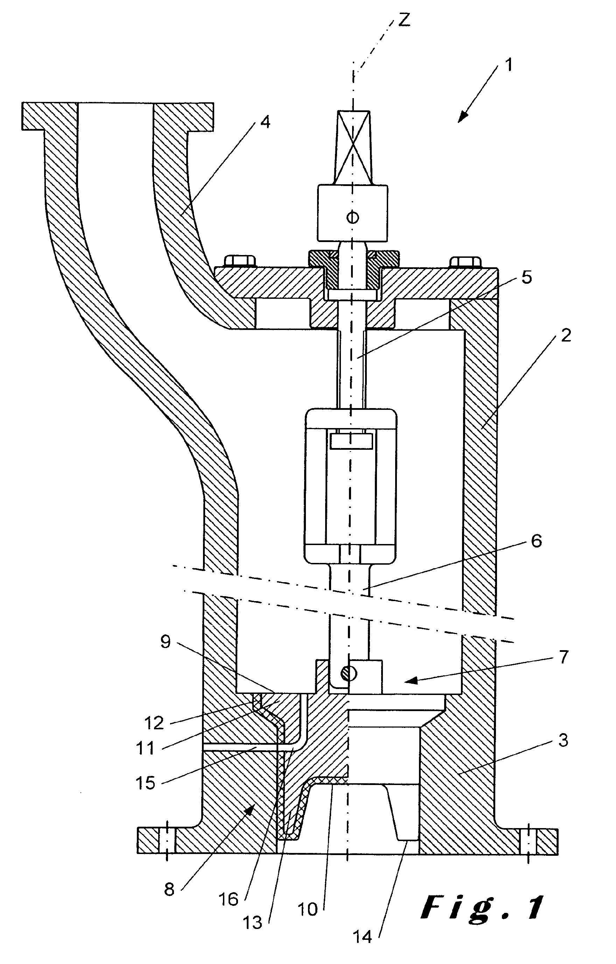

Fig. 1 illustrates a hydrant 1, in particular for underground installation. The hydrant 1 comprises a hollow body 2 and a valve 3 below it for connecting the hydrant 1 to a water supply. The hollow body 2 comprises a nozzle 4, to tap the water from the hydrant 1, and a spindle 5, that can be turned from the outside of the hydrant 1, and is connected to a rod 6 axially attached to a valve body 7 of the valve 3 for opening and closing said valve 3. The valve 3 comprises said valve body 7 and a valve seat 8. The valve body 7, which is displaceable along an axis Z to open and close the valve 2, has a top 9, a bottom 10 and, between them, an upper, conical surface and a lower, cylindrical surface. The valve seat 8 also comprises complementary, closely fitting upper and lower surfaces, which in this embodiment are directly formed, by instance by machining, in the hollow body 2.

The valve body 7 is formed by a hard, metallic core 11 covered with a soft, elastomeric coating 12. When the hydrant 1 is to be connected to a drinking water supply, the material of the coating 16 should of course be suitable for contact with drinking water. The valve body 7 also comprises two extensions, or ears 13 and 14, below the bottom 10. The core 11 also extends into both these ears 13, 14, so that both are substantially rigid, so as to guide the valve body 7 in an axial movement within the valve 3.

The lower, cylindrical surface of the valve seat 8 is perforated by a drain hole 15 leading to the exterior of the hydrant 1. Within the valve body 7, a drainage canal 16 connects the top 9 of the valve body 7 with its lower, cylindrical surface.

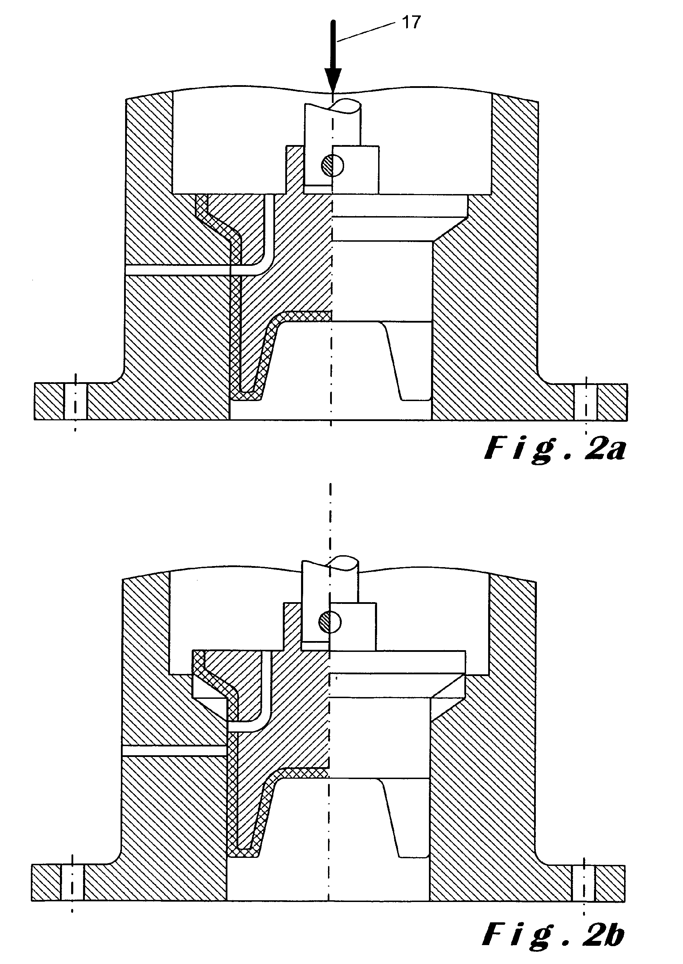

Figs. 2a to 2c illustrate the operation of the valve 3. When the valve 3 is closed, as illustrated in Fig. 2a, the drainage canal 16 is aligned with the drain hole 15, and any liquid above the valve body 7 can drain through the drainage canal 16 and hole 15 and out of the hydrant 1. In this closed position, the upper, conical surface and lower, cylindrical surface of the valve body 7 fit closely against the corresponding surfaces of the valve seat 8. In particular, the upper, conical surfaces of, respectively, the valve body 7 and seat 8 can form together a tight, uninterrupted seal that can be secured by an axial force 17 pushing the valve body 7 and seat 8 together.

As illustrated in Fig. 2b, when the valve 3 starts to open, for instance by an axial movement of the rod 6, pulled by rotation of the spindle 5, the conical surfaces are brought out of engagement with each other. However, the cylindrical surfaces, which are substantially parallel to the axis Z, remain in contact, substantially preventing the flow of liquid through the valve 3, at least until the drainage canal 16 and hole 15 are no longer connected.

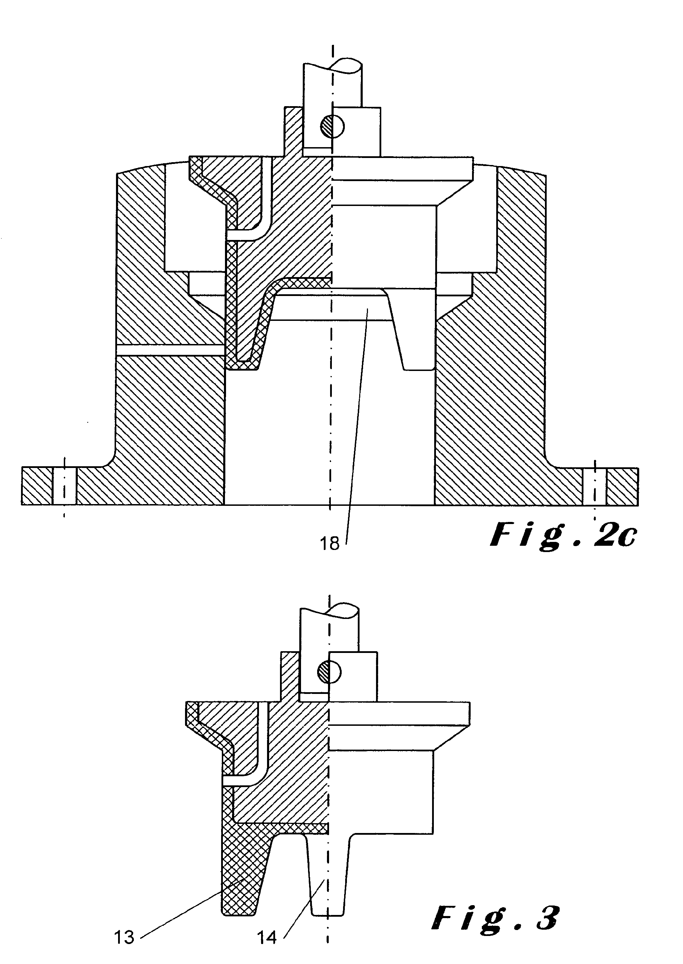

Fig. 2c illustrates an open position of the valve 3, in which the valve body 7 is axially displaced further upwards, so that the cylindrical surfaces are also brought out of engagement and liquid can flow through the valve 3, namely through openings 18 between the valve body 7 and seat 8. The ears 13 and 14, however, remain in contact with the cylindrical surface of the valve seat 8, so as to guide the valve body 7 in its axial movement. Moreover, the ear 13 facing the drain hole 15 seals said drain hole 15 and prevents that part of the liquid flowing through the valve 3 is diverted through said drain hole 15.

Once open, as in Fig. 2c, the valve 3 can be closed again, through the position illustrated in Fig. 2b, back to the position illustrated in Fig. 2a. The drain hole 15 then remains closed until it is aligned with the drainage canal 16 in the valve body 7, when substantially all the liquid remaining above the valve body 7, for instance within the hollow body 2, will be drained through said drainage canal 16 and drain hole 15.

In the alternative embodiment illustrated in Fig. 3, the valve body 7 comprises three extensions below its bottom 10, namely a sealing ear 13 and two guiding ears 14. In this embodiment, the hard, metallic core 11 extends into the two guiding ears 14, which will thus also be substantially rigid, but not into the sealing ear 13, which will be integrally made of the soft, elastomeric material of the coating 12, and thus be substantially flexible. In the open valve 2, this sealing ear 13 will face the drain hole 15 so as to seal it. With this embodiment, the liquid pressure will press the sealing ear 13 against the drain hole 15, achieving a better seal. For better stability and guidance of the valve body 7, three or more guiding ears 14 may be used instead of just two.

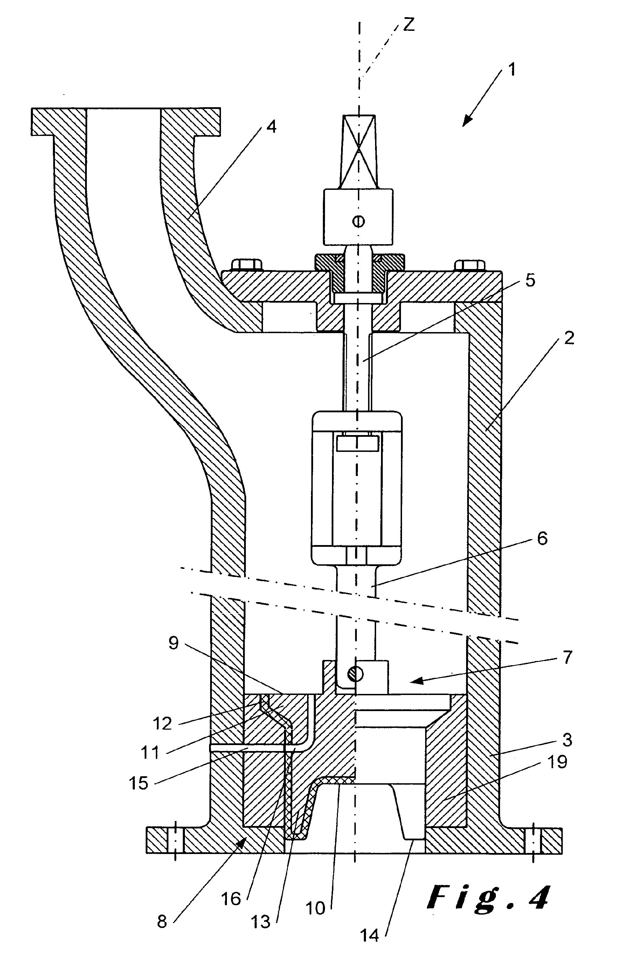

In the alternative embodiment of the hydrant 1 illustrated in Fig. 4, the valve seat 8 is not directly formed in the hollow body 2. Because the hollow body 2 will normally be made of cast iron, a more corrosion-resistant material may be advantageous for the valve seat 8. For this reason, the valve seat 8 is formed in a sleeve 19 press-fit in a bore of the hollow body 2.

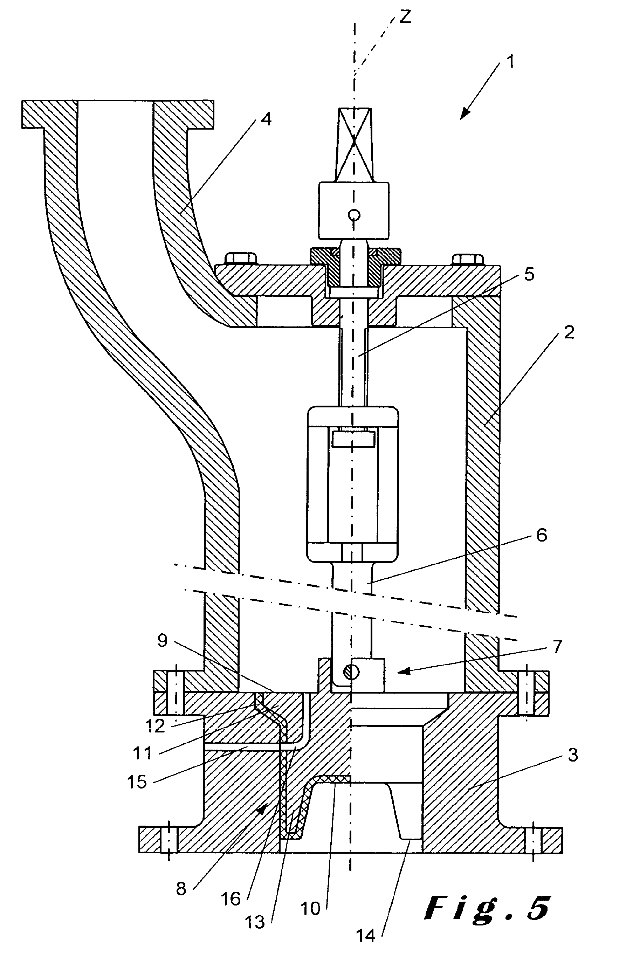

In another alternative embodiment, illustrated in Fig. 5, the whole valve 3 is separate from the hollow body 2 and bolted to it. The whole valve 3 may so be removed from the hydrant 2 for replacement or maintenance.

Although the present invention has been described with reference to specific exemplary embodiments, it will be evident that various modifications and changes may be made to these embodiments without departing from the broader scope of the invention as set forth in the claims. Accordingly, the description and drawings are to be regarded in an illustrative sense rather than a restrictive sense.

### REFERENCE SIGNS

- 1: Hydrant
- 2: Hollow body
- 3: Valve
- 4: Nozzle
- 5: Spindle
- 6: Rod
- 7: Valve body
- 8: Valve seat
- 9: Top
- 10: Bottom
- 11: Core
- 12: Coating
- 13: Ear
- 14: Ear
- 15: Drain hole
- 16: Drainage canal
- 17: Axial force
- 18: Openings
- 19: Sleeve
- Z: Displacement axis

## Claims

1. A valve (3), in particular a water valve (3) for a hydrant (1), said valve (3) comprising a valve seat (8) and a valve body (7) displaceable in an axis (Z) between a lower position in which said valve body (7) fits against the valve seat (8), thus closing the valve (3), and a higher position in which the valve (3) is open, wherein:
- said valve seat (8) comprises an axial surface substantially parallel to said axis (Z) of displacement of the valve body (7), and a drain hole (15) perforated in said axial surface of the valve seat (8); and
- said valve body (7) comprises a top (9), a bottom (10), an axial surface between said top (9) and bottom (10), closely fitting said axial surface of the valve seat (8), a drainage canal (16) between said top (9) and said axial surface of the valve body (7) for connecting said top (9) with said drain hole (15) when the valve body (7) is in its lower position, and at least two extensions (13,14) at the bottom (10) for axially guiding said valve body (7) and sealing said drain hole (15) when the valve body (7) is in said higher position; and
**characterised in that** said valve seat (8) further comprises an additional surface, above its axial surface and at a substantial angle with respect to said axis of displacement (Z) of said valve body (7), and said valve body (7) also comprises another additional surface closely fitting said additional surface of the valve seat (8).

2. A valve (3) according to claim 1, wherein said extensions (13,14) at the bottom (10) of the valve body (7) are substantially rigid.

3. A valve (3) according to claim 1, wherein said extensions (13,14) at the bottom (10) of the valve body (7) are at least three, preferably four, and one (13) of them, sealing said drain hole (15) when the valve body (7) is in its higher position, is substantially flexible, whereas the others (14) are substantially rigid.

4. A valve (3) according to any one of the previous claims, wherein said valve body (7) comprises a hard core (11), for example metallic, and a soft coating (12), for example elastomeric, and preferably suitable for contact with drinking water.

5. A valve (3) according to any one of the previous claims, wherein said axial surfaces are substantially cylindrical and said additional surfaces are substantially conical or spherical.

6. A hydrant (1) comprising a hollow body (2) on top of a valve (3) according to any one of the previous claims.

7. A hydrant (1) according to claim 6, further comprising a rod (6), preferably connected to a spindle (5), within said hollow body (2) to move said valve body (7) between said higher and lower positions.

8. A hydrant (1) according to claims 6 or 7, wherein said valve seat (8) is integrally formed within said hollow body (2).

9. A hydrant (1) according to claims 6 or 7, wherein said valve seat (8) is formed in an inner sleeve (19) press-fit within said hydrant (1).

10. A hydrant according to claims 6 or 7, wherein said valve (3) is separate from, and releasably attached to, said hollow body (2).

## Patentansprüche

1. Ventil (3), insbesondere ein Wasserventil (3) für einen Hydranten (1), wobei das Ventil (3) einen Ventilsitz (8) und einen Ventilkörper (7) umfasst, der in einer Achse (Z) zwischen einer unteren Position, in der der Ventilkörper (7) an den Ventilsitz (8) gepasst ist, wodurch er das Ventil (3) schließt, und einer höheren Position verschiebbar ist, in der das Ventil (3) offen ist, wobei
- der Ventilsitz (8) eine axiale Oberfläche im Wesentlichen parallel zu der Verschiebungsachse (Z) des Ventilkörpers (7) und ein Ablaufloch (15) umfasst, das durch die axiale Oberfläche des Ventilsitzes (8) gebohrt ist; und
- der Ventilkörper (7) eine Oberseite (9), eine Bodenseite (10), eine axiale Oberfläche zwischen der Oberseite (9) und Bodenseite (10), die eng mit der axialen Oberfläche des Ventilsitzes (8) zusammenpasst, einen Ablaufkanal (16) zwischen der Oberseite (9) und der axialen Oberfläche des Ventilkörpers (7) zum Verbinden der Oberseite (9) mit dem Ablaufloch (15), wenn sich der Ventilkörper (7) in seiner unteren Position befindet, und zumindest zwei Erweiterungen (13, 14) an der Bodenseite (10) zum axialen Führen des Ventilkörpers (7) und Abdichten des Ablauflochs (15), wenn sich der Ventilkörper (7) in der höheren Position befindet, umfasst; und
**dadurch gekennzeichnet, dass** der Ventilsitz (8) ferner eine zusätzliche Oberfläche über seiner axialen Oberfläche und in einem wesentlichen Winkel bezüglich der Verschiebungsachse (Z) des Ventilkörpers (7) umfasst, und der Ventilkörper (7) ebenfalls eine weitere zusätzliche Oberfläche umfasst, die mit der zusätzlichen Oberfläche des Ventilsitzes (8) eng zusammenpasst.

2. Ventil (3) nach Anspruch 1, wobei die Erweiterungen (13, 14) an der Bodenseite (10) des Ventilkörpers (7) im Wesentlichen starr sind.

3. Ventil (3) nach Anspruch 1, wobei die Erweiterungen (13, 14) an der Bodenseite (10) des Ventilkörpers (7) zumindest drei, vorzugsweise vier sind, und eine (13) davon, die das Ablaufloch (15) abdichtet, wenn sich der Ventilkörper (7) in der höheren Position befindet, im Wesentlichen flexibel ist, während die anderen (14) im Wesentlichen starr sind.

4. Ventil (3) nach einem der vorhergehenden Ansprüche, wobei der Ventilkörper (7) einen harten Kern (11), beispielsweise metallisch, und eine weiche Ummantelung (12), beispielsweise Elastomer, und vorzugsweise für Kontakt mit Trinkwasser geeignet umfasst.

5. Ventil (3) nach einem der vorhergehenden Ansprüche, wobei die axialen Oberflächen im Wesentlichen zylindrisch sind und die zusätzlichen Oberflächen im Wesentlichen kegelförmig oder kugelförmig sind.

6. Hydrant (1), umfassend einen Hohlkörper (2) auf einem Ventil (3) nach einem der vorhergehenden Ansprüche.

7. Hydrant (1) nach Anspruch 6, ferner umfassend eine Stange (6), die vorzugsweise mit einer Spindel (5) verbunden ist, innerhalb des Hohlkörpers (2) zum Verschieben des Ventilkörpers (7) zwischen der höheren und unteren Position.

8. Hydrant (1) nach einem der Ansprüche 6 oder 7, wobei der Ventilsitz (8) einstückig innerhalb des Hohlkörpers (2) ausgebildet ist.

9. Hydrant nach einem der Ansprüche 6 oder 7, wobei der Ventilsitz (8) in einer inneren Hülse (19) ausgebildet ist, die in dem Hydranten (1) eingepresst ist.

10. Hydrant (1) nach einem der Ansprüche 6 oder 7, wobei das Ventil (3) von dem Hohlkörper (2) getrennt ist und lösbar daran angebracht ist.

## Revendications

1. Soupape (3), en particulier une soupape d'eau (3) pour une prise d'eau (1), ladite soupape (3) comportant un siège de soupape (8) et un corps de soupape (7) en mesure de se déplacer dans un axe (Z) entre une position inférieure dans laquelle ledit corps de soupape (7) vient s'adapter contre le siège de soupape (8), pour ainsi fermer la soupape (3), et une position supérieure dans laquelle la soupape (3) est ouverte, dans laquelle :
- ledit siège de soupape (8) comporte une surface axiale sensiblement parallèle par rapport audit axe (Z) de déplacement du corps de soupape (7), et un trou de drainage (15) perforé dans ladite surface axiale du siège de soupape (8); et
- ledit corps de soupape (7) comporte une partie supérieure (9), une partie inférieure (10), et une surface axiale entre ladite partie supérieure (9) et ladite partie inférieure (10), pour venir s'adapter étroitement au niveau de ladite surface axiale du siège de soupape (8), un canal de drainage (16) entre ladite partie supérieure (9) et ladite surface axiale du corps de soupape (7) à des fins de raccordement entre ladite partie supérieure (9) et ledit trou de drainage (15) quand le corps de soupape (7) se trouve dans sa position inférieure, et au moins deux parties saillantes (13, 14) au niveau de la partie inférieure (10) pour guider dans le sens axial ledit corps de soupape (7) et pour sceller ledit trou de drainage (15) quand le corps de soupape (7) se trouve dans ladite position supérieure; et
**caractérisée en ce que** ledit siège de soupape (8) comporte par ailleurs une surface supplémentaire, au-dessus de sa surface axiale et formant un angle important par rapport audit axe de déplacement (Z) dudit corps de soupape (7), et ledit corps de soupape (7) comporte aussi une autre surface supplémentaire venant s'adapter étroitement contre ladite surface supplémentaire du siège de soupape (8).

2. Soupape (3) selon la revendication 1, dans laquelle lesdites parties saillantes (13, 14) au niveau de la partie inférieure (10) du corps de soupape (7) sont sensiblement rigides.

3. Soupape (3) selon la revendication 1, dans laquelle lesdites parties saillantes (13, 14) au niveau de la partie inférieure (10) du corps de soupape (7) sont au moins au nombre de trois, de préférence au nombre de quatre, et l'une (13) d'entre elles, venant boucher ledit trou de drainage (15) quand le corps de soupape (7) se trouve dans sa position supérieure, est sensiblement flexible, alors que les autres (14) sont sensiblement rigides.

4. Soupape (3) selon l'une quelconque des revendications précédentes, dans laquelle ledit corps de soupape (7) comporte un noyau dur (11), par exemple métallique, et un revêtement mou (12), par exemple élastomère, et convenant de préférence à des fins de contact avec de l'eau potable.

5. Soupape (3) selon l'une quelconque des revendications précédentes, dans laquelle lesdites surfaces axiales sont sensiblement cylindriques et lesdites surfaces supplémentaires sont sensiblement coniques ou sphériques.

6. Prise d'eau (1) comportant un corps creux (2) sur une soupape (3) selon l'une quelconque des revendications précédentes.

7. Prise d'eau (1) selon la revendication 6, comportant par ailleurs une tige (6), de préférence raccordée à une broche (5), à l'intérieur dudit corps creux (2) à des fins de déplacement dudit corps de soupape (7) entre ladite position supérieure et ladite position inférieure.

8. Prise d'eau (1) selon la revendication 6 ou la revendication 7, dans laquelle ledit siège de soupape (8) est formé d'une seule pièce à l'intérieur dudit corps creux (2).

9. Prise d'eau (1) selon la revendication 6 ou la revendication 7, dans laquelle ledit siège de soupape (8) est formé sur un manchon intérieur (19) ajusté avec serrage à l'intérieur de ladite prise d'eau (1).

10. Prise d'eau selon la revendication 6 ou la revendication 7, dans laquelle ladite soupape (3) est séparée dudit corps creux (2), et attachée de manière libérable à celui-ci.
